# DEMANDE DE BREVET EUROPEEN

(11) **EP 2 677 722 A1**
(43) Date de publication de la demande: **25.12.2013**
(21) Numéro de dépôt: 13171902.3
(22) Date de dépôt: 13.06.2013
(51) Int. Cl.: H04L 29/08, G06F 17/30

(54) **Procédé de mise à dispositiion d'un contenu numérique par un terminal d'utilisateur sur un réseau de diffusion de contenus**

(30) Priorité: 18.06.2012 FR 1255697
(71) Demandeur: Orange, 75015 Paris (FR)
(72) Inventeur: Rouzaut, Fabian, 22660 TREVOU TREGUIGNEC (FR); Vandenbussche, Armand, 22300 LANNION (FR)

(57) **Abrégé**

Un procédé de mise à disposition d'un contenu numérique par un premier terminal d'utilisateur sur un réseau de diffusion de contenus, dit réseau CDN, ce réseau comprenant au moins un serveur père apte à acquérir des contenus stockés dans un serveur d'origine d'un fournisseur de services, au moins un serveur de réplication apte à stocker des contenus à proximité d'une zone de terminaux d'utilisateurs prédéfinie, et au moins un noeud de routage apte à déterminer au moins un serveur de réplication pour diffuser un contenu donné à des terminaux d'utilisateurs. Ce procédé est remarquable en ce qu'il comporte les étapes suivantes :
- téléchargement montant (E20, E22, E24) du contenu numérique par le premier terminal à destination d'un premier serveur de réplication identifié préalablement par un noeud de routage du réseau CDN ;
- suite à la réception du contenu par le premier serveur de réplication, activation (E24) d'un mécanisme de limitation du temps de stockage du contenu à une durée de stockage prédéfinie, et association (E24) au contenu d'une information, dite étiquette utilisateur, indicative du fait que le contenu provient d'un utilisateur ;
- envoi (E24) à destination du serveur père d'une information d'identification du contenu, cette information incluant l'étiquette utilisateur.

## Description

La présente invention concerne la distribution de contenus sur un réseau de communications et en particulier la distribution de contenus dans le monde communautaire bâti autour de réseaux sociaux informatiques.

Dans le domaine de la distribution de contenus, il est connu de mettre en oeuvre des réseaux de distribution de contenus connus sous l'acronyme CDN pour *Content Delivey Network* en anglais, qui sont constitués d'ordinateurs reliés en réseau à travers un réseau de type Internet (Internet ou un intranet) et qui coopèrent afin de mettre à disposition du contenu ou des données numériques (généralement du contenu multimédia volumineux) à des utilisateurs. De manière générale, un réseau CDN est constitué d'un ensemble de serveurs (encore désignés par "noeuds") dont une partie récupère des contenus stockés sur des serveurs dits "d'origine", associés généralement à des fournisseurs de services. Ces contenus sont ainsi "injectés" dans le CDN pour y être répliqués dans des noeuds répartis géographiquement en "bordure" du réseau de type Internet au plus prêt des utilisateurs. Un réseau CDN dispose par ailleurs d'un mécanisme de routage permettant à une requête utilisateur sur un contenu d'être servie par le noeud le "plus proche", dans le but d'optimiser le mécanisme de transmission/livraison. Les noeuds sont généralement connectés à Internet à travers différentes dorsales Internet. L'optimisation peut se traduire par la réduction des coûts de bande passante, l'amélioration de l'expérience utilisateur ainsi que l'allégement de la charge des serveurs d'origines.

Selon une implémentation typique, un réseau CDN peut être décrit comme une combinaison d'une infrastructure de diffusion de contenus et d'un mécanisme de routage. Un ou plusieurs serveurs d'origine, mis en oeuvre par un ou plusieurs fournisseurs de services (par exemple un opérateur de télécommunications) sont chargés de transférer des contenus à des noeuds de l'infrastructure de diffusion de contenus, en utilisant un mécanisme de distribution de contenus - par exemple, "à la demande" (*on demand*) ou en mode *push* (on dit parfois "prépositionnement" en français). Plus précisément, l'infrastructure de diffusion de contenus comprend un ensemble de noeuds (encore appelés "serveurs"), parmi lesquels des noeuds pères (*parent nodes* en anglais) et des noeuds de réplication (souvent désignés par *cache nodes* en anglais). Les noeuds pères sont chargés d'acquérir des contenus à partir des serveurs d'origine, tandis que les noeuds de réplications, situés à proximité des utilisateurs, sont chargés de fournir des copies de ces contenus aux utilisateurs finaux.

Quant au mécanisme de routage, il repose sur des noeuds de routage (*routing nodes*) qui sont chargés de déterminer, à partir de requêtes en provenance de terminaux d'utilisateurs, les noeuds de réplication de l'infrastructure de diffusion susmentionnée pour diffuser les contenus demandés, de façon à minimiser, selon le cas, le temps de réponse utilisateur (par ex. diffusion de contenu web) ou la meilleure qualité de diffusion (par ex. contenu en *streaming*).

Dans ce contexte, on comprendra que les réseaux CDN actuels sont conçus initialement pour répondre au besoin de diffuser efficacement des contenus en provenance de serveurs d'origine mis en oeuvre par des fournisseurs de services. Or, avec le développement des réseaux sociaux sur Internet, tels Facebook™, les services de publication de contenus d'utilisateurs sur le Web, tels que Picasa Web Album™ de Google, pour le partage de photos sur le Web, les utilisateurs ont de plus en plus la possibilité de télécharger dans le sens montant (*uploading* ou *uplinking* en anglais) des contenus sur le réseau pour les mettre à disposition d'autres utilisateurs.

Actuellement, ces contenus en provenance des utilisateurs doivent d'abord être stockés sur les serveurs d'origine d'un fournisseur de service avant de pouvoir être diffuser, via un réseau CDN, aux autres utilisateurs, selon un processus de diffusion conforme à celui brièvement exposé plus haut. Cette situation n'est pas optimale en termes de délai d'obtention d'un contenu pour un utilisateur demandeur situé dans une zone géographique proche de l'utilisateur à l'origine du contenu, puisque l'utilisateur demandeur devra attendre la disponibilité du contenu dans le serveur d'origine du fournisseur de services. Par ailleurs, l'utilisateur demandeur devra disposer d'une liaison descendante avec une bande passante suffisante pour recevoir le contenu stocké dans un serveur distant sur le réseau, ce qui peut être problématique dans des zones géographiques où la bande passante réseau est réduite.

Par ailleurs, les utilisateurs désirant stocker des contenus sur un serveur d'un fournisseur de services, via un réseau de type Internet, doivent également disposer d'une liaison montante disposant d'une bande passante suffisante pour transmettre un contenu vers un serveur sur le réseau.

Pour répondre en particulier aux inconvénients précités, il existe donc un besoin de disposer d'un réseau de type CDN adapté à la diffusion de contenus qui ont été mis à disposition par des utilisateurs par remontée de ces contenus dans le réseau.

Le document brevet US2008/0155061A1 répond partiellement à ce besoin en proposant un réseau CDN hybride associant un réseau CDN classique avec un réseau pair-à-pair (*peer-to-peer-* P2P, en anglais). Selon cette approche, le système de routage (*mapping system*) du réseau CDN est adapté pour pouvoir permettre à un noeud pair donné de localiser un autre noeud pair du réseau P2P, ou bien de localiser un serveur du réseau CDN, afin de pouvoir obtenir un contenu provenant d'un client du réseau CDN.

La présente invention propose de répondre au besoin défini plus haut en proposant une solution différente de celle décrite dans le document précité, et par ailleurs plus simple, puisqu'elle ne fait pas intervenir de réseau P2P.

Ainsi, selon un premier aspect, la présente invention a pour objet un procédé de mise à disposition d'un contenu numérique par un premier terminal d'utilisateur sur un réseau de diffusion de contenus, dit réseau CDN, le réseau comprenant au moins un serveur père apte à acquérir des contenus fournis par un serveur d'origine d'un fournisseur de services, au moins un serveur de réplication apte à stocker des contenus à proximité d'une zone de terminaux d'utilisateurs prédéfinie, et au moins un noeud de routage apte à déterminer au moins un serveur de réplication pour diffuser un contenu donné à des terminaux d'utilisateurs

Conformément à l'invention, ce procédé comporte des étapes de :
(a1) - téléchargement montant du contenu numérique par le premier terminal à destination d'un premier serveur de réplication identifié préalablement par un noeud de routage du réseau CDN ;
(b1) - suite à la réception du contenu par le premier serveur de réplication, activation d'un mécanisme de limitation du temps de stockage du contenu à une durée de stockage prédéfinie, et association au contenu d'une information, dite étiquette utilisateur, indicative du fait que le contenu provient d'un utilisateur ;
(b2) - envoi à destination du serveur père d'une information d'identification du contenu, cette information incluant l'étiquette utilisateur.

Ainsi, par le stockage temporaire du contenu originaire d'un premier terminal d'utilisateur par un serveur de réplication du réseau CDN, des terminaux d'utilisateurs situés dans la zone associée au serveur de réplication considéré pourront accéder rapidement au contenu à l'origine du premier terminal, s'ils se connectent par exemple à un portail du fournisseur de services avant la fin de la durée de vie de stockage du contenu dans le serveur de réplication.

Selon un mode de réalisation particulier de l'invention, l'étape (a1) du procédé précité comporte l'établissement d'une session de communication selon un protocole de type HTTP (*Hypertext Transfer Protocol*) entre le premier terminal et un serveur hébergeant un portail web du fournisseur de services, la session incluant :
- l'envoi par le premier terminal d'une requête de téléchargement montant du contenu et la redirection de la requête vers le noeud de routage du réseau CDN,
- la détermination, par le noeud de routage, du premier serveur de réplication associé au premier terminal et l'envoi d'une réponse au premier terminal incluant un lien permettant au premier terminal de télécharger dans le sens montant le contenu vers le premier serveur de réplication.

Selon l'invention, il est ainsi possible de réorienter automatiquement une requête de téléchargement montant d'un contenu provenant d'un terminal d'utilisateur, directement vers un réseau CDN, lequel détermine alors automatiquement un serveur de réplication situé à proximité d'un point de vue réseau du premier terminal, et chargé de stocker temporairement le contenu originaire du premier terminal.

Selon une caractéristique de l'invention, le procédé comprend en outre :
(c1) - l'envoi du contenu par le premier serveur de réplication à destination du serveur père pendant la durée de stockage du contenu ;
(c2) - l'envoi du contenu par le serveur père à destination du serveur de d'origine.

Ainsi, les autres utilisateurs, dont les terminaux sont connectés au réseau dans une zone autre que celle du premier terminal, pourront obtenir le contenu ultérieurement après réception du contenu par le serveur père du réseau CDN et stockage du contenu par le serveur d'origine. En pratique, ces utilisateurs pourront se connecter au portail web du fournisseur de services, qui aura été mis à jour en ce qui concerne l'accès au contenu.

Selon une caractéristique de mise oeuvre du procédé de l'invention, à l'étape (c1) précitée, l'envoi du contenu au serveur père est effectué à un instant déterminé au moins en fonction de la charge du réseau.

Ainsi, la transmission du contenu au serveur père déclenchée par exemple pendant les heures creuses d'utilisation du réseau (la nuit par exemple) permet notamment de ne pas pénaliser la bande passante du réseau et la qualité du service fourni aux utilisateurs.

Corrélativement, selon un deuxième aspect, la présente invention concerne un procédé de téléchargement descendant, par un second terminal d'utilisateur, d'un contenu numérique mise à disposition par un premier terminal d'utilisateur sur un réseau de type CDN, selon un procédé de mise à disposition d'un contenu, tel que succinctement exposé plus haut. Conformément à l'invention, le procédé de téléchargement montant comprend des étapes de :
(d1) - envoi par le second terminal, via un portail web d'un fournisseur de services, d'une première requête d'obtention du contenu originaire du premier terminal, et redirection en conséquence de la première requête d'obtention vers un noeud de routage du réseau CDN ;
(d2) - détermination, par le noeud de routage, d'un serveur de réplication associé au second terminal, dit second serveur de réplication, et redirection de la première requête d'obtention vers le second serveur de réplication ;
(d3) - suite à la réception de ladite première requête, vérification du stockage du contenu dans le second serveur de réplication ;
(d4) - si le contenu est stocké dans le second serveur de réplication, vérification que le contenu est associé à une étiquette utilisateur et envoi du contenu vers le second terminal ;
(d5) - si le contenu n'est pas stocké dans le second serveur de réplication, envoi par le second serveur de réplication d'une seconde requête d'obtention du contenu à destination d'un serveur père du réseau CDN.

Grâce au procédé de téléchargement descendant (*downloading* en anglais) précité, un contenu numérique préalablement téléchargé dans le sens montant (*uploaded* en anglais) par un premier terminal d'utilisateur, pourra être récupéré ensuite par un second terminal d'utilisateur. De cette façon, des utilisateurs par exemple faisant partie d'une communauté d'utilisateurs liée à un réseau social, pourront s'échanger des contenus via un tel réseau de type CDN.

En particulier, grâce à la mise en oeuvre de l'étape (d4) précitée, un second terminal situé dans la même zone que le premier terminal pourra disposer rapidement du contenu demandé par une transmission directe du contenu du (second) serveur de réplication vers le second terminal, contrairement à ce qui est possible avec les réseaux CDN existants, avant que la durée de stockage du contenu dans le serveur de réplication n'expire.

Selon une caractéristique de mise en oeuvre de l'invention, en cas d'échec de la seconde requête d'obtention du contenu envoyée au serveur père, une troisième requête d'obtention du contenu est envoyée à destination d'un serveur d'origine du fournisseur de services, et en cas d'échec de cette troisième requête d'obtention, le serveur père met en oeuvre les étapes suivantes :
- détermination que le contenu est associé à une étiquette utilisateur ;
- envoi à destination du second terminal, via le second serveur de réplication, d'un message d'indisponibilité temporaire du contenu.

Cette implémentation est appropriée notamment lorsque le réseau est trop chargé, par exemple du fait du nombre important de terminaux d'utilisateurs connectés simultanément. Le message d'indisponibilité pourra par exemple informer l'utilisateur du second terminal que le contenu sera disponible par exemple sous 24 heures, étant donné que la réception du contenu dans le serveur père est attendue, conformément au procédé de mise à disposition susmentionné, puisque le contenu est étiqueté "utilisateur".

Selon une autre caractéristique de mise en oeuvre de l'invention, en cas d'échec de la seconde requête d'obtention du contenu envoyée au serveur père, une troisième requête d'obtention du contenu est envoyée à destination d'un serveur d'origine du fournisseur de services, et en cas d'échec de cette troisième requête d'obtention, les étapes suivantes sont mises en oeuvre :
- détermination par le serveur père que le contenu est associé à une étiquette utilisateur et que le contenu est toujours stocké dans un serveur de réplication associé au premier terminal, dit premier serveur de réplication ;
- envoi par le serveur père d'une quatrième requête d'obtention du contenu à destination du premier serveur de réplication ;
- récupération du contenu par le serveur père et envoi du contenu au second serveur de réplication ;
- transmission du contenu du second serveur de réplication vers le second terminal.

Cette implémentation est particulière adaptée à une situation dans laquelle le réseau est relativement peu chargé, dans ce cas le second terminal pourra récupérer le contenu demandé, avant même que le contenu soit transmis de manière automatique par le premier serveur de réplication au serveur père, pendant la durée de stockage du contenu dans le premier serveur de réplication.

Selon un troisième aspect, la présente invention a pour objet un réseau de diffusion de contenus numériques, ce réseau comprenant au moins un serveur père apte à acquérir des contenus fournis par au moins un serveur d'origine d'un fournisseur de services, au moins un serveur de réplication apte à stocker des contenus à proximité d'une zone de terminaux d'utilisateurs prédéfinie, et au moins un noeud de routage apte à déterminer au moins un serveur de réplication pour diffuser un contenu donné à des terminaux d'utilisateurs. Selon l'invention un tel réseau comprend :
- au moins un noeud de routage comportant :
   - des moyens de réception d'une requête de téléchargement montant d'un contenu numérique en provenance d'un serveur de communication d'un fournisseur de services, cette requête ayant été émise par un terminal de communication lors d'une session de communication établie entre le terminal et le serveur de communication puis redirigée vers le noeud de routage;
   - des moyens de traitement de la requête de téléchargement montant adaptés à déterminer un serveur de réplication associé au terminal, à envoyer une réponse au terminal incluant un lien permettant au terminal de télécharger dans le sens montant le contenu vers le serveur de réplication déterminé ;
- au moins un serveur de réplication comportant :
   - des moyens de réception d'un contenu téléchargé dans le sens montant par un terminal d'utilisateur ;
   - des moyens de traitement du contenu, adaptés à activer un mécanisme de limitation du temps de stockage du contenu reçu à une durée de stockage prédéfinie, à associer au contenu une information, dite étiquette utilisateur, indicative du fait que le contenu provient d'un utilisateur, et à envoyer à destination d'un serveur père une information d'identification du contenu, cette information incluant l'étiquette utilisateur ;
   - des moyens d'envoi du contenu à destination d'un serveur père pendant la durée de stockage du contenu ;
- au moins un serveur père comportant :
   - des moyens de traitement d'une information d'identification d'un contenu téléchargé dans le sens montant par un terminal d'utilisateur, cette information incluant une étiquette utilisateur associée au contenu ;
   - des moyens d'envoi d'un contenu associé à une étiquette utilisateur à destination d'un serveur d'origine du fournisseur de services.

Par ailleurs, l'invention a également pour objets un noeud de routage, un serveur de réplication, un serveur père, mis en oeuvre dans un réseau de diffusion de contenus numériques, selon l'invention, tel que succinctement défini plus haut.

En pratique, les procédés selon l'invention, exposés plus haut, relatifs à la mise à disposition et au téléchargement descendant d'un contenu numérique sont mis en oeuvre sous forme d'un ensemble de programmes d'ordinateur répartis entre au moins un noeud de routage, au moins un serveur de réplication, et au moins un serveur père, mis en oeuvre dans un réseau de diffusion selon l'invention.

Par conséquent, selon un dernier aspect, la présente invention a pour objets de tels programmes d'ordinateur comportant des instructions de programme pour la mise en oeuvre de tout ou partie des étapes d'un procédé de mise à disposition et d'un procédé de téléchargement descendant d'un contenu numérique, tels que brièvement exposés plus haut, lorsque ces programmes sont exécutés par un processeur incorporé, notamment, dans un noeud approprié d'un tel réseau de type CDN.

Par ailleurs, un programme d'ordinateur selon l'invention peut utiliser n'importe quel langage de programmation, et être sous forme de code source, code objet, ou de code intermédiaire entre code source et code objet, tel que dans une forme partiellement compilée, ou dans n'importe quelle autre forme souhaitable. L'invention vise aussi par conséquent un support d'enregistrement d'informations lisible par un ordinateur, et comportant des instructions d'un programme d'ordinateur selon l'invention. Un tel support d'enregistrement peut être constitué par n'importe quelle entité ou dispositif capable de stocker un tel programme. Par exemple, le support peut comporter un moyen de stockage, tel qu'une mémoire de type ROM (*read only memory*), par exemple un CD ROM ou une ROM de circuit microélectronique, ou encore un moyen d'enregistrement amovible tel qu'une clé USB ou un moyen d'enregistrement magnétique, tel qu'un disque dur. D'autre part, un programme ou module logiciel selon l'invention peut être en particulier téléchargé sur un réseau de type Internet.

Les avantages procurés par la mise en oeuvre d'un tel réseau de diffusion de contenus selon l'invention et les différentes entités qu'il comporte (serveur père, serveur de réplication, noeud de routage), ainsi que les programmes d'ordinateur selon l'invention, tels que brièvement définis plus haut, sont identiques ou contribuent à ceux mentionnés plus haut en relation avec les deux procédés selon l'invention, respectivement de mise à disposition et de téléchargement d'un contenu numérique, et ne seront donc pas rappelés ici.

D'autres caractéristiques et avantages de la présente invention ressortiront de la description détaillée qui suit, laquelle fait référence aux dessins annexés dans lesquels :
- la figure 1 représente un réseau de diffusion de contenus dans lequel la présente invention peut être implémentée ;
- la figure 2 représente, sous forme d'organigramme, les principales étapes d'un procédé de mise à disposition d'un contenu numérique, selon l'invention ;
- la figure 3 représente un diagramme d'échange de messages entre les principaux éléments d'un réseau de diffusion de contenus, pour la mise en oeuvre d'un procédé de mise à disposition d'un contenu numérique par un premier terminal d'utilisateur, selon un mode de réalisation de l'invention ;
- la figure 4 représente, sous forme d'organigramme, les principales étapes d'un procédé de téléchargement descendant d'un contenu numérique, selon l'invention ;
- la figure 5 représente un diagramme d'échange de messages entre les principaux éléments d'un réseau de diffusion de contenus, pour la mise en oeuvre d'un procédé de téléchargement descendant d'un contenu numérique par un second terminal d'utilisateur situé à proximité du premier terminal, selon un mode de réalisation de l'invention ; et
- la figure 6 représente un diagramme d'échange de messages entre les principaux éléments d'un réseau de diffusion de contenus, pour la mise en oeuvre d'un procédé de téléchargement descendant d'un contenu numérique par un troisième terminal d'utilisateur situé dans une zone distante de celle du premier terminal, selon un mode de réalisation de l'invention.

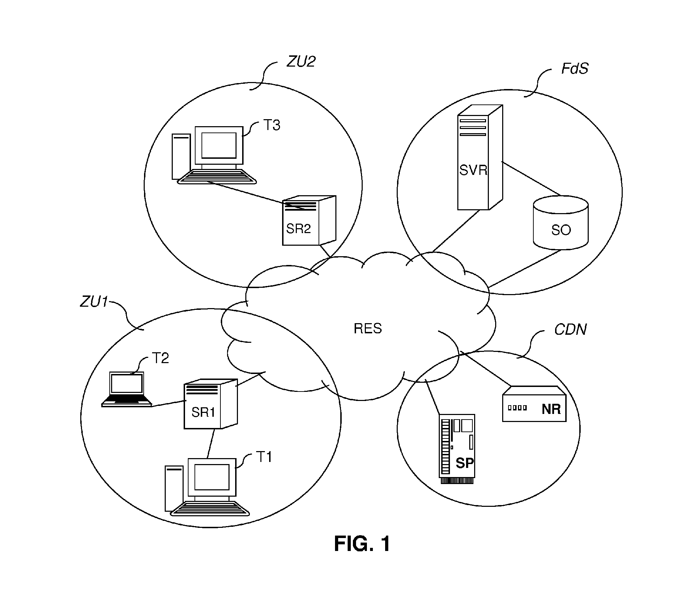

La **figure 1** illustre un réseau de diffusion de contenus dans lequel la présente invention peut être implémentée. Comme représenté de manière simplifiée sur la figure 1 afin de faciliter l'exposé de l'invention, le réseau de diffusion de contenus comporte un réseau principal RES appelé souvent "coeur de réseau" (*core network* en anglais), typiquement un réseau basé sur le protocole IP (*Internet Protocol*), c'est-à-dire un réseau de type Internet. Divers réseaux d'accès ou zones sont connectés au réseau RES, un réseau d'accès, FdS, d'un fournisseur de services , une "zone" CDN (*Content Delivery Network*) facilitant la diffusion de contenus fournis par le fournisseur de services à des terminaux d'utilisateurs T1, T2, T3 connectés au réseau RES via des réseaux d'accès ZU1, ZU2, désignés aussi par "zone de terminaux d'utilisateurs" dans le cadre du présent exposé. Le fournisseur de services, par exemple un opérateur de télécommunications, met ainsi à disposition sur le réseau des contenus numériques multimédias stockés initialement dans un serveur d'origine (*origine server* en anglais) SO, ces contenus étant accessibles aux utilisateurs via une connexion Internet à un portail web hébergé par un serveur de communication, SVR, du fournisseur de services.

La partie ou zone spécifiquement "CDN", dit réseau CDN, du réseau diffusion de contenus représenté sur la figure 1, comprend au moins un serveur père SP apte à acquérir des contenus fournis par le serveur d'origine SO du fournisseur de services, et au moins un noeud de routage NR apte à déterminer au moins un serveur de réplication pour diffuser un contenu donné à des terminaux d'utilisateurs. Le réseau CDN comprend par conséquent aussi des serveurs de réplication (SR1, SR2) aptes à stocker des contenus à proximité, respectivement, d'une zone de terminaux d'utilisateurs (ZU1, ZU2). Dans l'exemple de réseau illustré, la zone utilisateur ZU1 comprend ainsi deux terminaux T1, T2 et un serveur de réplication SR1, tandis que la zone utilisateur ZU2 comprend un terminal T3 et un serveur de réplication SR2.

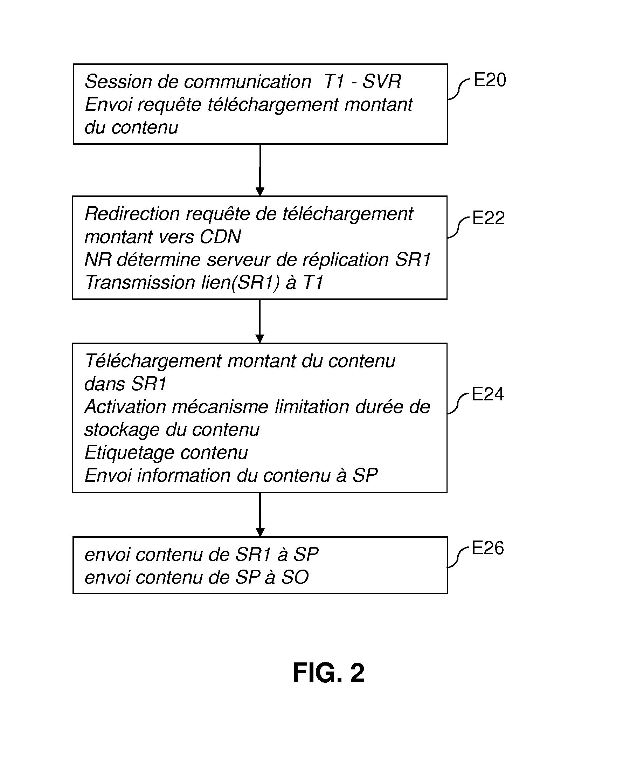

Comme cela sera expliqué plus en détail en liaison avec les figures 2-6, afin de mettre en oeuvre les procédés selon l'invention exposés plus haut - c'est-à-dire, le procédé de mise à disposition (par téléchargement montant) d'un contenu par un terminal utilisateur et le procédé de téléchargement descendant d'un tel contenu par un terminal d'utilisateur -, le noeud de routage NR, les serveurs de réplication SR1, SR2 (on dit encore "serveur de proximité"), le serveur père SP, mettent en oeuvre des fonctionnalités spécifiques à la présente invention implémentées sous la forme d'éléments ou modules logiciels.

Ainsi, le noeud de routage NR comporte en particulier :
- un module de réception d'une requête de téléchargement montant (*uploading* en anglais) d'un contenu numérique en provenance du serveur de communication SVR du fournisseur de services (FdS) ; la requête téléchargement est issue d'un terminal de communication (par ex. T1) lors d'une session de communication établie entre le terminal et le portail web hébergé par le serveur de communication SVR, cette requête étant redirigée automatiquement vers le noeud de routage (NR) ;
- un module de traitement de requêtes adapté à traiter une requête de téléchargement montant, afin de déterminer un serveur de réplication (SR1) associé au terminal (par ex. T1) à l'origine du contenu, à envoyer une réponse à ce terminal ; en pratique cette réponse inclut un lien permettant au terminal d'effectuer le téléchargement dans le sens montant du contenu considéré vers le serveur de réplication déterminé (SR1).

Chaque serveur de réplication selon l'invention comprend en particulier :
- un module de réception d'un contenu téléchargé dans le sens montant par un terminal d'utilisateur (par ex. T1) ;
- un module de traitement de contenus, chargé d'activer un mécanisme de limitation du temps de stockage d'un contenu reçu, à une durée de stockage prédéfinie (*TTL*), à associer à un tel contenu une information, dite étiquette utilisateur (Tag), indicative du fait que le contenu provient d'un utilisateur (T1 par ex.), et à envoyer à destination du serveur père SP une information d'identification du contenu, cette information incluant l' étiquette utilisateur associée au contenu ;
- un module de transmission de contenus chargé d'envoyer un contenu considéré, obtenu par téléchargement montant, à destination d'un serveur père (SP dans l'exemple de la figure 1) pendant la durée de stockage du contenu.

Enfin, un serveur père (SP) selon l'invention comporte :
- un module de traitement d'une information d'identification d'un contenu téléchargé dans le sens montant par un terminal d'utilisateur, cette information incluant une étiquette utilisateur associée au contenu ;
- un module de transmission de contenus aptes à envoyer un contenu associé à une étiquette utilisateur à destination du serveur d'origine SO du fournisseur de services (FdS).

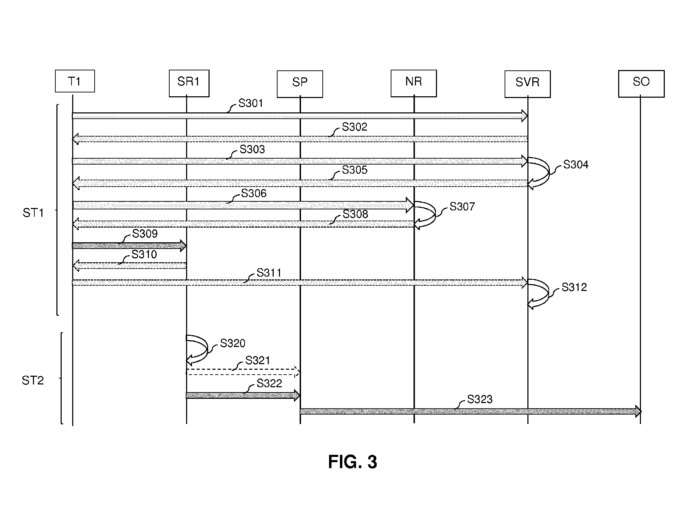

En relation avec la **figure 2****,** on va à présent décrire les principales étapes d'un procédé de mise à disposition d'un contenu numérique, selon l'invention, qui peut être également qualifié de procédé de téléchargement montant d'un contenu par un terminal d'utilisateur. Dans l'exemple choisi et illustré à l'aide des figures 2 et 3, le procédé de mise à disposition d'un contenu débute par une étape E20 au cours de laquelle le terminal d'utilisateur T1, un ordinateur personnel par exemple, établit une session de communication via Internet en utilisant un protocole de type HTTP avec le serveur de communication SVR du fournisseur de services, qui héberge le portail web du fournisseur de services. Au cours de la session de communication, le terminal T1 envoie à destination du serveur SVR une requête de téléchargement montant d'un contenu numérique considéré choisi par l'utilisateur du terminal T1, par exemple, une vidéo, des photos, etc.

A l'étape E22, la requête de téléchargement montant est redirigée, via une adresse URL (*Uniform Resource Locator*), vers le noeud de routage NR du réseau CDN, lequel noeud de routage détermine alors que le terminal T1 est associé au serveur de réplication SR1. Le noeud de routage NR transmet alors une réponse au terminal T1, cette réponse incluant un hyperlien, tel qu'un lien HTML (*HyperText Markup Language*) ou XML (*Extensible Markup Language*) par exemple, pointant vers le serveur de réplication SR1.

En conséquence, à l'étape E24, le terminal T1 utilise l'hyperlien pour télécharger dans le sens montant le contenu dans le serveur de réplication SR1. Ensuite, dans le serveur de réplication SR1, il est procédé à l'activation d'un mécanisme de limitation de la durée de stockage du contenu téléchargé à une valeur déterminée, par l'intermédiaire par exemple d'une variable TTL (de l'anglais *Time To Live,* durée de vie), à laquelle on affecte une valeur initiale, par exemple 48 heures, qui est décrémentée ensuite en fonction du temps écoulé. Par ailleurs, une information indicative de l'origine utilisateur du contenu, par opposition aux contenus mis à disposition par le fournisseur de services (vidéo à la demande (VoD) par exemple). Cette information est associée au contenu comme une étiquette (*tag* en anglais). En pratique, cette étiquette correspond à une variable *Tag* à laquelle on attribue la valeur *'user'* (utilisateur). La variable *TTL* et la variable *Tag* sont associées à un identifiant du contenu - par exemple un nom de fichier représenté par une variable *Name,* par exemple "Name=mavidéo.wmv" (ici il s'agit d'un fichier vidéo au format *Microsoft Windows Media Video*™)*.* Ainsi, pour un contenu donné, les valeurs respectives des variables *Name, Tag, TTL* sont associées, par exemple dans un registre ou une table, pour constituer une information d'identification du contenu considéré. Toujours à l'étape E24, l'information d'identification du contenu est envoyée à destination du serveur père SP du réseau CDN, avant l'expiration de la durée de stockage. Dans le mode de réalisation choisi, l'envoi du contenu au serveur père SP est effectué à un instant déterminé au moins en fonction de la charge du réseau. Par exemple, l'envoi pourra être effectué pendant une plage horaire où l'activité du réseau est faible, telle que la nuit (22h-6h). Une fois le contenu reçu dans le serveur père SP, ce dernier transmet à son tour le contenu à destination du serveur d'origine SO du fournisseur de services.

La **figure 3** représente un diagramme d'échange de messages entre les principaux éléments du réseau de diffusion de contenus représenté à la figure 1, pour la mise en oeuvre du procédé de mise à disposition d'un contenu numérique illustré à la figure 2, selon un mode de réalisation de l'invention. Les échanges représentés à la figure 3 sont divisés en deux phases ST1 et ST2, relatives respectivement au téléchargement montant d'un contenu du terminal T1 vers le serveur de réplication associé (SR1) et au traitement du contenu après réception par le serveur de réplication. Ainsi, lors de la première phase ST1, le terminal T1 ayant préalablement chargé au moyen d'un navigateur web une page web associée au portail web du fournisseur de services, envoie (S301), à destination du serveur SVR hébergeant le portail, une requête de type HTTP GET afin d'obtenir le lien vers lequel télécharger dans le sens montant le contenu choisi par l'utilisateur du terminal T1. En réponse, le serveur SVR envoie (S302) au terminal T1 une réponse contenant un formulaire HTML permettant à l'utilisateur du terminal T1 de sélectionner un fichier local à télécharger dans le sens montant. Ainsi, le terminal T1 transmet (S303) au serveur SVR une réponse identifiant le fichier à transférer, et le nom (*Name*) de ce fichier est sauvegardé (S304) dans le serveur SVR. Le serveur SVR transmet (S305) alors au terminal T1 une réponse HTTP contenant un lien redirigeant la requête de téléchargement montant initiale du terminal T1 vers le noeud de routage NR du réseau CDN. Le terminal T1, via le lien de redirection reçu, envoie (S306) alors une requête de type HTTP GET à destination du noeud de routage NR afin d'obtenir le lien vers lequel le contenu doit être effectivement transmis. En réponse, le noeud de routage NR détermine (S307) le serveur de réplication SR1 comme étant associé au terminal T1, et envoie (S308) au terminal T1 une réponse HTTP contenant un lien pointant vers le serveur de réplication SR1. Le terminal T1 transmets (S309) alors le contenu, via le lien précité reçu, au serveur de réplication SR1, en utilisant un protocole tel que HTTP ou FTP (*File Transfer Protocol*). Lorsque le transfert du contenu est terminé, le serveur de réplication (SR1) confirme la bonne réception du contenu en envoyant (S310) un message d'acquittement (OK) au terminal T1. Le terminal T1 signifie (S311) alors au serveur SVR du fournisseur de services la fin du téléchargement montant du contenu considéré. La phase ST1 se termine alors par la création (S312) dans le serveur SVR d'un hyperlien ou adresse web (URL, *Uniform Resource Locator*) associant le nom du contenu (nom de fichier) et un chemin d'accès pointant vers le réseau CDN. Ainsi, à l'issue de la phase ST1, le contenu qui vient d'être téléchargé dans le sens montant par le terminal T1 est référencé dans le portail web (serveur SVR) du fournisseur de services, et peut être consulté sur requête d'un autre utilisateur connecté au réseau.

Lors de la phase ST2 représentée à la figure 3, suite à la réception, dans le serveur de réplication SR1, du contenu originaire du terminal T1, comme exposé plus haut en liaison avec la figure 2, il est procédé (S320) dans le serveur de réplication à l'étiquetage du contenu - c'est-à-dire, l'affection de la valeur "user" à la variable *Tag* associée au contenu -, et à l'activation du mécanisme de limitation de la durée de stockage (*TTL*) du contenu dans le serveur de réplication. L'information d'identification du contenu ainsi obtenue (*Name, Tag, TTL*) est ensuite transmise (S321) par le serveur de réplication SR1 au serveur père SP du réseau CDN, selon un protocole de communication propre au réseau CDN. Le contenu est ensuite transféré (S322) selon un protocole de type FTP ou HTTP au serveur père SP à un moment choisi pendant une période de faible occupation du réseau. Enfin, à son tour, le serveur père SP transfère (S323) le contenu, en utilisant le même protocole, au serveur d'origine SO du fournisseur de services.

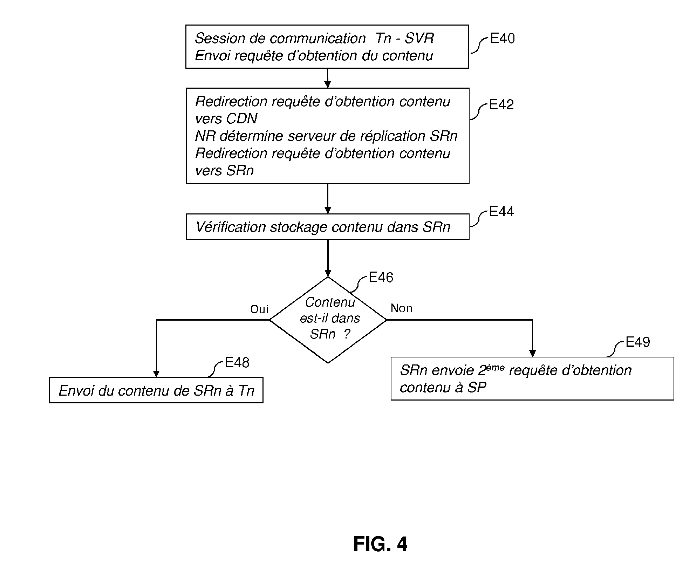

En relation avec la **figure 4**, on va à présent décrire les principales étapes d'un procédé de téléchargement descendant d'un contenu numérique, selon l'invention, par un terminal d'utilisateur. Dans l'exemple choisi et illustré à l'aide des figures 4 à 6, le procédé de téléchargement descendant (*downloading* en anglais) d'un contenu débute par une étape E40 au cours de laquelle un terminal d'utilisateur Tn (PC, tablette, *smartphone* ou autre système informatique) distinct du terminal T1 - le terminal T2 ou le terminal T3 sur la figure 1 -, établit une session de communication via Internet en utilisant un protocole de type HTTP avec le serveur de communication SVR du fournisseur de services, qui héberge le portail web du fournisseur de services. Au cours de la session de communication, l'utilisateur du terminal Tn sélectionne le contenu (mavidéo.wmv) préalablement téléchargé dans le sens montant par le terminal T1 et déclenche l'envoi à destination du serveur SVR d'une requête de téléchargement (descendant) du contenu numérique précité, désignée par "première requête". A l'étape E42, la requête de téléchargement descendant est automatiquement redirigée vers le réseau CDN, et le noeud de routage NR du réseau CDN détermine alors le serveur de réplication SRn (SR1 ou SR2 selon le cas) qui est associé au terminal Tn. La première requête est alors redirigée par le noeud de routage NR vers le serveur de réplication identifié SRn. Suite à la réception de la première requête par le serveur de réplication SRn, le contenu demandé est recherché (E44) dans le serveur de réplication SRn. L'étape suivante (E46) est une étape de décision en fonction du stockage ou non du contenu demandé dans le serveur de réplication SRn. Si le contenu est présent (E46, oui) dans le serveur de réplication SRn, alors le contenu est envoyé (E48) au terminal Tn, à condition que le contenu soit associé à une étiquette *Tag* dont la valeur est 'User'. En revanche, si le contenu demandé n'est pas stocké dans le serveur de réplication SRn, ce dernier envoie (E49) alors une requête d'obtention du contenu ("seconde requête") à destination du serveur père SP.

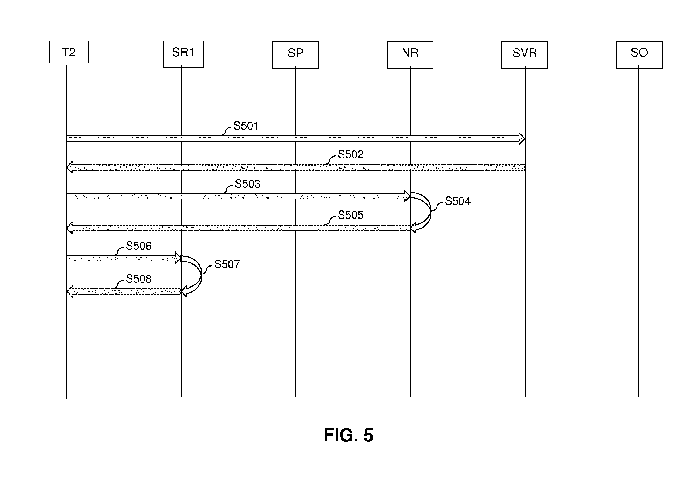

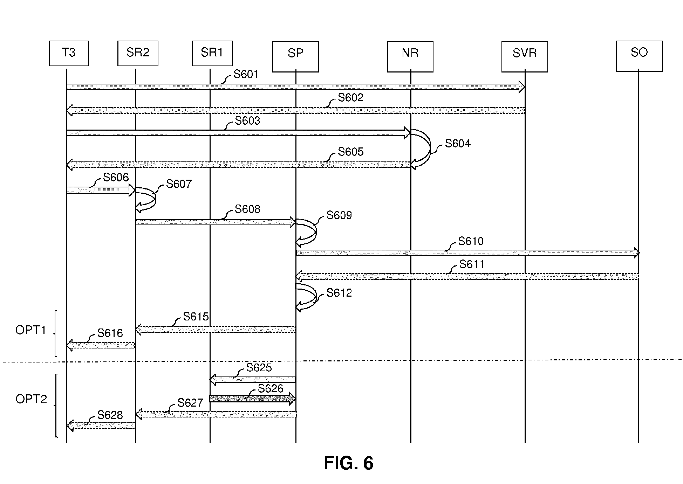

Ce qui précède relativement à la figure 4 ainsi que le traitement de la seconde requête d'obtention du contenu par le serveur père SP va à présent être décrit plus en détail, ne liaison avec les figures 5 et 6.

La **figure 5** représente un diagramme d'échange de messages entre les principaux éléments d'un réseau de diffusion de contenus, pour la mise en oeuvre d'un procédé de téléchargement descendant d'un contenu numérique par un second terminal d'utilisateur (T2) situé à proximité (ZU1) du premier terminal (T1), selon un mode de réalisation de l'invention.

A la figure 5, on suppose que le terminal T2, s'étant connecté au préalable au portail hébergé par le serveur SVR du fournisseur de services, transmet une requête de téléchargement descendant du contenu originaire du terminal T1, avant le transfert du contenu par le terminal T1 vers le serveur d'origine SO (étapes S322-S323, figure 3).

Ainsi, le terminal T2 situé dans la même zone (ZU1) que celle du terminal T1 envoie (S501) une requête de type HTTP GET à destination du serveur SVR afin d'obtenir le contenu originaire du terminal T1. Le serveur SVR transmet (S502) alors au terminal T2 un message de réponse 'HTTP 302' contenant un lien redirigeant la requête de téléchargement descendant issue du terminal T2 vers le noeud de routage NR du réseau CDN. Le terminal T2, via le lien de redirection reçu, envoie (S503) alors une requête de type 'HTTP GET' à destination du noeud de routage NR afin d'obtenir le lien à partir duquel le contenu peut être téléchargé. En réponse, le noeud de routage NR détermine (S504) le serveur de réplication SR1 comme étant associé au terminal T2, et envoie (S505) au terminal T2 une réponse HTTP contenant un lien pointant vers le serveur de réplication SR1. Le terminal T2 envoie (S506) alors une requête de type 'HTTP GET' à destination du serveur de réplication SR1 afin d'obtenir le contenu. Le serveur de réplication SR1 vérifie (S507) que le contenu demandé est bien stocké en mémoire locale et que le contenu est associé à une étiquette "utilisateur" : *Tag=user.* Comme le contenu est associé à une étiquette indiquant qu'il a été mis à disposition par un utilisateur (contenu non originaire du fournisseur de services), le serveur de réplication SR1 peut le transmettre directement au terminal T2 sans nécessité de demander une validation auprès du serveur d'origine SO du fournisseur de services, par conséquent, le serveur de réplication SR1 envoie (S508) au terminal T2 une réponse de type 'HTTP 200' validant le transfert effectif du contenu demandé, depuis le serveur de réplication SR1 vers le terminal T2.

La **figure 6** représente un diagramme d'échange de messages entre les principaux éléments d'un réseau de diffusion de contenus, pour la mise en oeuvre d'un procédé de téléchargement descendant d'un contenu numérique par un troisième terminal d'utilisateur (T3) situé dans une zone distante (ZU2) de celle du premier terminal (T1), selon un mode de réalisation de l'invention.

A la figure 6, on suppose que le terminal T3, s'étant connecté au préalable au portail hébergé par le serveur SVR du fournisseur de services, transmet une requête de téléchargement descendant du contenu originaire du terminal T1, avant le transfert du contenu par le terminal T1 vers le serveur d'origine SO (étapes S322-S323, figure 3).

Le terminal T3 situé dans la zone ZU2 (distincte de celle du terminal T1) envoie (S601) une requête de type 'HTTP GET' à destination du serveur SVR afin d'obtenir le contenu originaire du terminal T1. Le serveur SVR transmet (S602) alors au terminal T3 un message de réponse 'HTTP 302' contenant un lien redirigeant la requête de téléchargement descendant issue du terminal T3 vers le noeud de routage NR du réseau CDN. Le terminal T3, via le lien de redirection reçu, envoie (S603) alors une requête de type 'HTTP GET' à destination du noeud de routage NR afin d'obtenir l'adresse à partir de laquelle le contenu peut être téléchargé. En réponse, le noeud de routage NR détermine (S604) le serveur de réplication SR2 comme étant associé au terminal T3, et envoie (S605) au terminal T3 une réponse HTTP contenant un lien pointant vers le serveur de réplication SR2. Le terminal T3 envoie (S606) alors une requête de type 'HTTP GET' à destination du serveur de réplication SR2 afin d'obtenir le contenu. Le serveur de réplication SR2 recherche alors localement (S607) le contenu demandé et, ne le trouvant pas, envoie (S608) à son tour une requête d'obtention du contenu ("seconde requête") de type 'HTTP GET' à destination du serveur père SP. Le serveur père SP recherche (S609) à son tour localement le contenu, et comme cette recherche échoue, envoie (S610) une requête d'obtention du contenu ("troisième requête") à destination du serveur d'origine SO du fournisseur de services. La troisième requête échoue - puisque le contenu n'a pas encore été transmis par le serveur de réplication SR1, voir figure 3 -, en conséquence le serveur d'origine SO transmet (S611) au serveur père SP, une réponse négative sous la forme d'une réponse de type 'HTTP 404'. Le serveur père SP consulte (S612) alors une table d'informations de contenus et en extrait l'information d'identification du contenu demandé : *Name, Tag, TTL,* et détermine que le contenu est associé à une étiquette "utilisateur" : *Tag=user.* En conséquence, selon le mode de réalisation exposé, deux options peuvent être mises en oeuvre.

Selon la première option (OPT1), le serveur père SP transmet (S615-S616) une réponse (HTML 200) associée à une page HTML contenant, par exemple, un message indiquant que le contenu n'est pas encore disponible et invitant l'utilisateur du terminal T3 à réessayer ultérieurement après un intervalle de temps (par exemple 24 heures) suffisant pour que le serveur de réplication SR1 puisse transmettre le contenu au serveur d'origine SO pendant la durée de vie de stockage TTL (48 heures par exemple) du contenu dans le serveur de réplication SR1 (cf. étapes S322 et S323 de la phase ST2 à la figure 3).

Selon la seconde option (OPT2), le serveur père SP détermine (S612) à partir de l'information (*Name, Tag, TTL*) relative au contenu demandé et extraite de la table d'informations de contenus stockée localement - laquelle table est mise à jour régulièrement sur requête de chaque serveur de réplication du réseau CDN - que le contenu demandé est toujours stocké dans le serveur de réplication SR1 (TTL n'est pas égal à zéro). En conséquence, le serveur père SP envoie (S625) à destination du serveur de réplication SR1, une (quatrième) requête d'obtention du contenu (HTTP GET). Le serveur de réplication SR1 transmet (S626) le contenu demandé au serveur père SP, et ce dernier, ayant récupéré le contenu, à l'étape S627, envoie une réponse de type 'HTTP 200' suivie de la transmission du contenu, au serveur de réplication SR2 associé au terminal T3. Finalement, le serveur de réplication SR2 transmet (S628) à son tour le contenu au terminal utilisateur T3.

## Revendications

1. **Procédé de mise à disposition** d'un contenu numérique par un premier terminal d'utilisateur sur un réseau de diffusion de contenus, dit réseau CDN, ledit réseau comprenant au moins un serveur père apte à acquérir des contenus stockés dans un serveur d'origine d'un fournisseur de services, au moins un serveur de réplication apte à stocker des contenus à proximité d'une zone de terminaux d'utilisateurs prédéfinie, et au moins un noeud de routage apte à déterminer au moins un serveur de réplication pour diffuser un contenu donné à des terminaux d'utilisateurs ; ledit procédé étant **caractérisé en ce qu'il** comporte des étapes de :
(a1) - téléchargement montant (E20, E22, E24) dudit contenu numérique par le premier terminal à destination d'un premier serveur de réplication identifié préalablement par un noeud de routage du réseau CDN ;
(b1) - suite à la réception dudit contenu par le premier serveur de réplication, activation (E24) d'un mécanisme de limitation du temps de stockage du contenu à une durée de stockage prédéfinie, et association (E24) audit contenu d'une information, dite étiquette utilisateur, indicative du fait que ledit contenu provient d'un utilisateur ;
(b2) - envoi (E24) à destination du serveur père d'une information d'identification dudit contenu, ladite information incluant ladite étiquette utilisateur.

2. Procédé selon la revendication 1, dans lequel l'étape (a1) comporte l'établissement d'une session de communication selon un protocole de type HTTP entre le premier terminal (T1) et un serveur (SVR) hébergeant un portail web du fournisseur de services, ladite session incluant :
- l'envoi (S301-S303) par le premier terminal d'une requête de téléchargement montant dudit contenu et la redirection (S304-S306) de ladite requête vers le noeud de routage du réseau CDN,
- la détermination (S307), par le noeud de routage, du premier serveur de réplication (SR1) associé au premier terminal (T1) et l'envoi (S308) d'une réponse au premier terminal incluant un lien permettant au premier terminal de télécharger dans le sens montant le contenu vers le premier serveur de réplication.

3. Procédé selon la revendication 2, comprenant en outre :
(c1) - l'envoi (S320-S322) dudit contenu par le premier serveur de réplication (SR1) à destination du serveur père (SP) pendant la durée de stockage du contenu ;
(c2) - l'envoi (S323) du contenu par le serveur père (SP) à destination dudit serveur de d'origine (SO).

4. Procédé selon la revendication 3, dans lequel, à l'étape (c1), l'envoi du contenu au serveur père est effectué à un instant déterminé au moins en fonction de la charge du réseau.

5. **Procédé de téléchargement** descendant, par un second terminal d'utilisateur, d'un contenu numérique mise à disposition par un premier terminal d'utilisateur sur un réseau de type CDN, selon un procédé conforme à l'une quelconque des revendications 1 à 4, ledit procédé de téléchargement comprenant des étapes de :
(d1) - envoi (E40) par le second terminal (T2, T3), via un portail web d'un fournisseur de services, d'une première requête d'obtention du contenu originaire du premier terminal (T1), et redirection (E42) en conséquence de ladite première requête d'obtention vers un noeud de routage (NR) du réseau CDN ;
(d2) - détermination (E42), par le noeud de routage, d'un serveur de réplication (SR1, SR2) associé au second terminal (T2, T3), dit second serveur de réplication, et redirection (E42) de la première requête d'obtention vers le second serveur de réplication ;
(d3) - suite à la réception de ladite première requête, vérification (E44) du stockage du contenu dans le second serveur de réplication ;
(d4) - si le contenu est stocké (E46) dans le second serveur de réplication, vérification que le contenu est associé à une étiquette utilisateur et envoi (E48) du contenu vers le second terminal ;
(d5) - si le contenu n'est pas stocké (E46) dans le second serveur de réplication, envoi par le second serveur de réplication d'une seconde requête d'obtention du contenu à destination d'un serveur père du réseau CDN.

6. Procédé selon la revendication 5, dans lequel, en cas d'échec de la seconde requête d'obtention du contenu envoyée au serveur père, une troisième requête d'obtention du contenu est envoyée à destination d'un serveur d'origine du fournisseur de services, et en cas d'échec de ladite troisième requête d'obtention, le serveur père met en oeuvre les étapes suivantes :
- détermination que le contenu est associé à une étiquette utilisateur ;
- envoi à destination du second terminal, via le second serveur de réplication, d'un message d'indisponibilité temporaire du contenu.

7. Procédé selon la revendication 5, dans lequel, en cas d'échec de la seconde requête d'obtention du contenu envoyée au serveur père, une troisième requête d'obtention du contenu est envoyée à destination d'un serveur d'origine du fournisseur de services, et en cas d'échec de ladite troisième requête d'obtention, les étapes suivantes sont mises en oeuvre :
- détermination par le serveur père que le contenu est associé à une étiquette utilisateur et que le contenu est toujours stocké dans un serveur de réplication associé au premier terminal, dit premier serveur de réplication ;
- envoi par le serveur père d'une quatrième requête d'obtention du contenu à destination du premier serveur de réplication ;
- récupération du contenu par le serveur père et envoi du contenu au second serveur de réplication ;
- transmission du contenu du second serveur de réplication vers le second terminal.

8. **Réseau de diffusion de contenus** numériques, ledit réseau comprenant au moins un serveur père apte à acquérir des contenus fournis par au moins un serveur d'origine d'un fournisseur de services, au moins un serveur de réplication apte à stocker des contenus à proximité d'une zone de terminaux d'utilisateurs prédéfinie, et au moins un noeud de routage apte à déterminer au moins un serveur de réplication pour diffuser un contenu donné à des terminaux d'utilisateurs ; ledit réseau étant **caractérisé en ce qu'il** comporte :
• au moins un noeud de routage comportant :
- des moyens de réception d'une requête de téléchargement montant d'un contenu numérique en provenance d'un serveur de communication d'un fournisseur de services, ladite requête ayant été émise par un terminal de communication lors d'une session de communication établie entre ledit terminal et ledit serveur de communication puis redirigée vers ledit noeud de routage;
- des moyens de traitement de ladite requête de téléchargement montant adaptés à déterminer un serveur de réplication associé audit terminal, à envoyer une réponse au terminal incluant un lien permettant au terminal de télécharger dans le sens montant ledit contenu vers le serveur de réplication déterminé ;
• au moins un serveur de réplication comportant :
- des moyens de réception d'un contenu téléchargé dans le sens montant par un terminal d'utilisateur ;
- des moyens de traitement dudit contenu, adaptés à activer un mécanisme de limitation du temps de stockage du contenu reçu à une durée de stockage prédéfinie , à associer audit contenu une information, dite étiquette utilisateur, indicative du fait que le contenu provient d'un utilisateur, et à envoyer à destination d'un serveur père une information d'identification dudit contenu, ladite information incluant ladite étiquette utilisateur ;
- des moyens d'envoi dudit contenu à destination d'un serveur père pendant la durée de stockage du contenu ;
• au moins un serveur père comportant :
- des moyens de traitement d'une information d'identification d'un contenu téléchargé dans le sens montant par un terminal d'utilisateur, ladite information incluant une étiquette utilisateur associée au contenu ;
- des moyens d'envoi d'un contenu associé à une étiquette utilisateur à destination d'un serveur d'origine du fournisseur de services.

9. Réseau selon la revendication 8, comprenant en outre des moyens répartis entre lesdits au moins un noeud de routage, serveur de réplication, et serveur père, lesdits moyens répartis étant adaptés à la mise en oeuvre d'un procédé de téléchargement descendant selon l'une quelconque des revendications 5 à 7.

10. **Noeud de routage** mis en oeuvre dans un réseau de diffusion de contenus conforme à l'une des revendications 8 ou 9, ledit noeud de routage comportant :
- des moyens de réception d'une requête de téléchargement montant d'un contenu numérique en provenance d'un serveur de communication d'un fournisseur de services, ladite requête ayant été émise par un terminal de communication lors d'une session de communication établie entre ledit terminal et ledit serveur de communication puis redirigée vers ledit noeud de routage;
- des moyens de traitement de ladite requête de téléchargement montant adaptés à déterminer un serveur de réplication associé audit terminal, à envoyer une réponse au terminal incluant un lien permettant au terminal de télécharger dans le sens montant ledit contenu vers le serveur de réplication déterminé.

11. **Serveur de réplication** mis en oeuvre dans un réseau de diffusion de contenus conforme à l'une des revendications 8 ou 9, ledit serveur de réplication comportant :
- des moyens de réception d'un contenu téléchargé dans le sens montant par un terminal d'utilisateur ;
- des moyens de traitement dudit contenu, adaptés à activer un mécanisme de limitation du temps de stockage du contenu reçu à une durée de stockage prédéfinie, à associer audit contenu une information, dite étiquette utilisateur, indicative du fait que le contenu provient d'un utilisateur, et à envoyer à destination d'un serveur père une information d'identification dudit contenu, ladite information incluant ladite étiquette utilisateur ;
- des moyens d'envoi dudit contenu à destination d'un serveur père pendant la durée de stockage du contenu.

12. **Serveur père** mis en oeuvre dans un réseau de diffusion de contenus conforme à l'une des revendications 8 ou 9, ledit serveur père comportant :
- des moyens de traitement d'une information d'identification d'un contenu téléchargé dans le sens montant par un terminal d'utilisateur, ladite information incluant une étiquette utilisateur associée au contenu ;
- des moyens d'envoi d'un contenu associé à une étiquette utilisateur à destination d'un serveur d'origine du fournisseur de services.

13. **Programme** d'ordinateur comportant des instructions de programme pour la mise en oeuvre de tout ou partie des étapes d'un procédé de mise à disposition d'un contenu numérique selon l'une quelconque des revendications 1 à 4, ou bien d'un procédé de téléchargement descendant selon l'une quelconque des revendications 5 à 7, lorsque ce programme est exécuté par un processeur.
